# EUROPEAN PATENT APPLICATION

(11) **EP 1 519 374 A2**
(43) Date of publication of application: **30.03.2005**
(21) Application number: 04022516.1
(22) Date of filing: 22.09.2004
(51) Int. Cl.: G11B 17/028

(54) **Disk clamp apparatus**

(30) Priority: 24.09.2003 JP 2003331171
(71) Applicant: MATSUSHITA ELECTRIC INDUSTRIAL CO., LTD., Kadoma-shi, Osaka 571-8501 (JP)
(72) Inventor: Tanabe, Naohisa, Osaka-shi Osaka 532-0002 (JP); Ariyoshi, Yuji, Toyonaka-shi Osaka 561-0802 (JP)
(74) Representative: Eisenführ, Speiser & Partner

(57) **Abstract**

A disk clamp apparatus includes a first centering member for positioning a center of a first side of the disk set on the turntable, a clamper member provided so as to be opposed to the first centering member across the turntable and the disk, an attraction force generating mechanism for clamping the disk on the turntable by attraction force, a clamper member turning mechanism for turning the clamper member in order to change over a clamp mode between a first clamp mode in which the disk is clamped with the first side of the disk centrally positioned, and a second clamp mode in which the disk is clamped with the second side of the disk centrally positioned. The clamper member includes a disk supporting part for supporting a second side of the disk when the first side of the disk is centrally positioned by the first centering member, and second centering mechanism for centrally positioning the second side of the disk. The second centering mechanism cancels the centering operation with respect to the first side of the disk by the first centering means, and centrally positions the second side of the disk by the attraction force when the first clamp mode is switched to the second clamp mode.

## Description

### BACKGROUND OF THE INVENTION

### Field of the Invention

The present invention relates to a disk clamp apparatus which concentrically clamps a disk-shaped record medium (referred to as simply the "disk" hereinafter) on a turntable in a disk apparatus in which an information signal is read and/or written on the disk, especially in a disk apparatus in which reading and/or writing operation can be performed on both sides of the disk.

### Description of the Background Art

As is well known, in a field of a disk apparatus, a DVD reading and writing apparatus in which an information signal can be read and/or written on a so-called DVD (Digital Video Disk or Digital Versatile Disk) medium has been widely spread recently. In order to further spread the DVD reading/writing apparatus, it is required that the reading and/or writing operation can be continuously performed for long periods of time. As one method of enabling the reading and/or writing operation to be continuously performed for long periods of time, there is a method in which reading and/or writing operations are performed on a DVD disk having both sides on which the reading and/or writing operations can be performed, without performing an inject operation each side of the DVD.

In addition, in this specification the term "reading and/or writing operation (with the information signal on the disk)" means at least either one of "writing operation (with the information signal to the disk)" or "reading operation (of the information signal written on the disk)", which is simplified to the above term. Therefore, the term "disk apparatus (or DVD reading/writing apparatus) in which reading and/or writing operation can be performed (with the information signal on the disk)" means not only a "disk apparatus (or DVD reading and writing apparatus) in which both reading. operation (of the information signal written on the disk) and writing operation (with the information signal to the disk) can be performed" but also a "disk apparatus (or DVD reading apparatus) in which only reading operation (of the information signal written on the disk)".

Conventionally, as a disk apparatus in which reading and/or writing operation can be performed with an information signal on both sides (one is referred to as A side and the other is referred to as B side hereinafter) of a disk-shaped record medium, a type of disk drive disclosed in Japanese Patent No. 2858337 is well known, for example.

That is, said patent discloses a disk apparatus in which a pair of optical pickups is provided on both sides of a turntable and the pair of optical pickups is selectively used.

In addition, said patent discloses a disk clamp apparatus incorporated in a disk apparatus in which one optical pickup is provided for one turntable, this optical pickup is moved to the A side when an information signal is read or written on the A side (hereinafter, referred to as simply "A-side reading/writing operation", and the optical pickup is moved to the B side when the information signal is read or written on the B side (hereinafter, referred to as simply "B-side reading/writing operation).

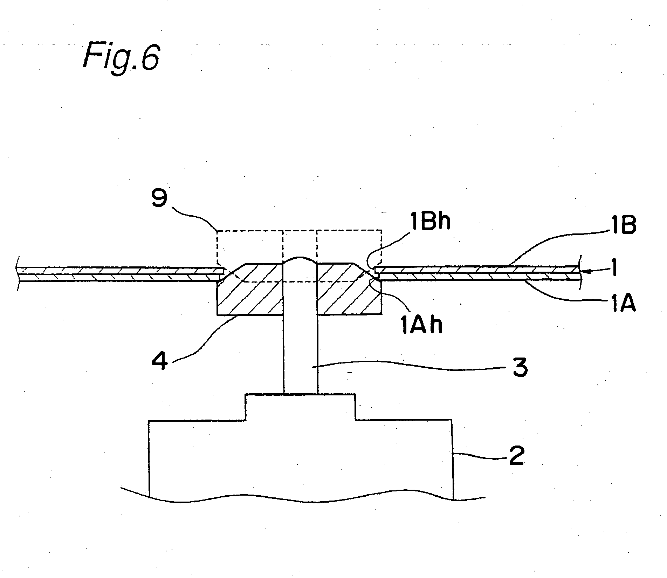

A description will be made of a constitution of the conventional disk clamp apparatus with reference to Figs. 6 to 8.

Fig. 6 is a view showing a centering principle when a disk in which reading and/or writing operations can be performed on both A and B sides (hereinafter, referred to as the "double-sided disk") is clamped by the disk clamp apparatus according to the prior art.

As shown in Fig. 6, a double-sided disk 1 is constituted such that a substrate having A side 1A and a substrate having B side 1B are attached together. Accordingly, with respect to a center hole of the disk 1 which decides the rotation center of the disk 1, there is inevitably provided a fine difference in center position and/or diameter dimension between a center hole 1Ah of the A side 1A and a center hole 1Bh of the B side 1B in the disk center.

Therefore, in order to perform an ideal reading or writing operation with high rotation precision, it is necessary to perform a centering operation to the center hole 1Ah of the A side 1A by using a A-side centering member 4 at the time of A-side reading/writing operation, and to perform a centering operation to the center hole 1Bh of the B side 1B by using a B-side centering member 9 at the time of B-side reading/writing operation.

In this case, the term "centering" means the operation in which the center of the center hole 1Ah or 1Bh of the disk 1 which decides the rotation center of the disk 1 may coincide with the rotation center axis of a spindle 3 of a motor 2 (spindle motor) which rotates the disk 1, that is, so-called "centering" operation.

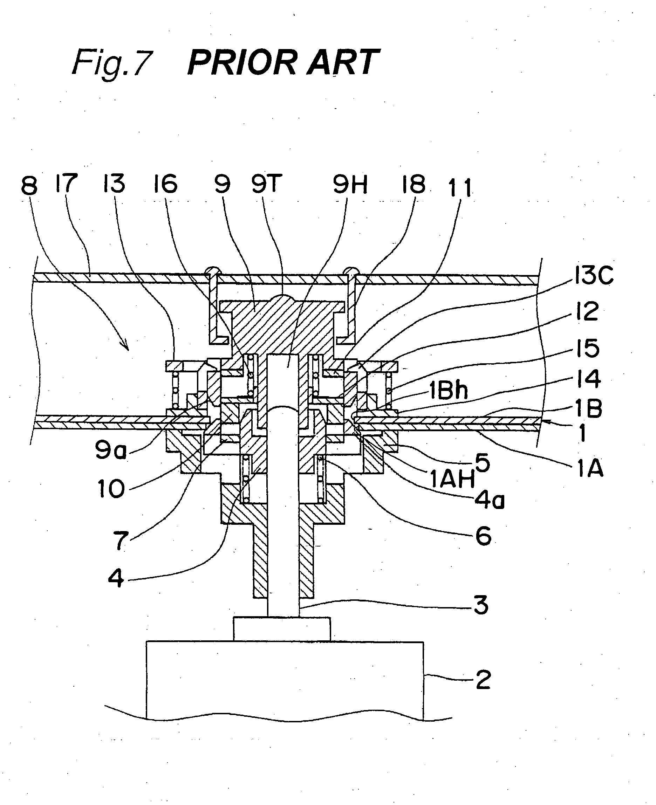

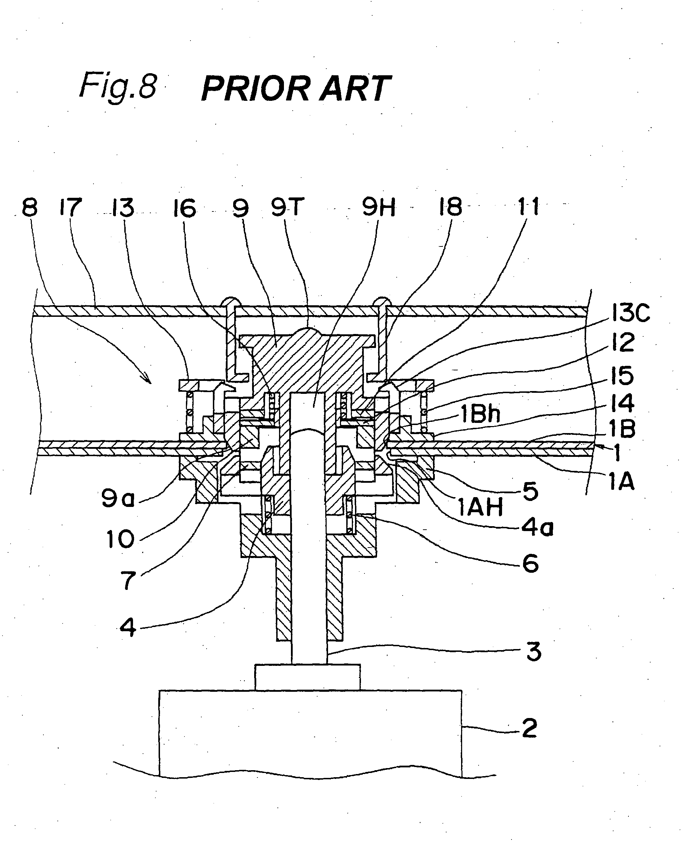

Fig. 7 is a sectional view showing the conventional disk clamp apparatus when an information signal is read or written on the A side 1A of the double-sided disk 1 (at the time of A-side reading/writing operation), and Fig. 8 is a sectional view showing the conventional disk clamp apparatus when an information signal is read or written on the B side 1B of the double-sided disk 1 (at the time of B-side reading/writing operation).

As shown Figs. 7 and 8, a turntable 5 on which the disk 1 is set is fixed to a periphery part of the spindle 3, and the turntable 5 is rotated by the spindle motor 2 through the spindle 3.

The A-side centering member 4 is urged upward in Figs. 7 and 8 by a compression spring 6 provided between the centering member 4 and the turntable 5. In addition, a main magnet 10 is fixed to a clamper 8 while a magnetic body 7 which receives attraction force toward the main magnet 10 by magnetic force of the main magnet 10 is fixed to the turntable 5. The main magnet 10 is integrally formed with a yoke 12 and the main magnet 10 and the yoke 12 are integrally formed with a press ring 13.
Furthermore, a sub magnet 11 is fixed to the B-side centering member 9.

A clamp ring 14 which can press the disk 1 toward the turntable 5 is provided on the side of the disk 1 opposite to the turntable 5 (upper side in Figs. 7 and 8). A compression spring 15 which urges the clamp ring 14 toward the disk 1 is provided between the clamp ring 14 and the press ring 13. In addition, a compression spring 16 which urges the B-side centering member 9 and the press ring 13 to be separated is provided between the B-side centering member 9 and the press ring 13.

Besides, a clamp plate 17 which lifts and lowers the clamper 8 is provided above the B-side centering member 9, and a holder 18 which lifts the clamper 8 in accordance with the lifting operation of the clamp plate 17 is provided in the clamp plate 17.

A tapered part 9a of the B-side centering member 9 is not continuously formed over the entire periphery of the B-side centering member 9 and it is separately formed at several points (two or three points, for-example) of a peripheral part of the B-side centering member 9, which penetrate a slit provided in the press ring 13 in the vertical direction. In addition, the B-side centering member 9 is guided by the central hole 13h of the press ring 13 so that it can slide in the vertical direction. And, the B-side centering member 9 is urged toward the direction so that it is separated from the press ring 13 (to the upper direction in Figs. 7 and 8) by the compression spring 16, but it is retained in the press ring 13 by a plurality of claws 13C provided in the press ring 13. In addition, the spindle 3 fits in a guide hole 9H at the center of the B-side centering member 9 so as to be able to slide in the vertical direction.

Next, an operation of the conventional disk clamp apparatus constituted as described above will be explained.

As shown in Fig. 7, the clamper 8 and the clamp plate 17 are not in touch with each other but they are separated in the A-side reading/writing state. In this state, the A side 1A of the double-sided disk 1 is centrally positioned when a tapered part 4a of the A-side centering member 4 is associated wit a peripheral part of the center hole 1Ah of the A side 1A. In this centering state, the disk 1 is pressed toward the disk set face 5f of the . turntable 5 by the clamp ring 14. This press force is generated by attraction force (magnetic force) working between the main magnet 10 fixed to the yoke 12 and the magnetic body 7 fixed to the turntable 5. In this state, since the press ring 13 and the clamp ring 14 are attached in the vertical direction and both integrally work as a rigid body, the above press force intensity is determined only by the attraction force working between the main magnet 10 and the magnetic body 7.

Meanwhile, Fig. 8 shows the B-side reading/writing state. This state is provided as follows.

That is, the clamp plate 17 abuts on a projection 9T which is the highest part of the B-side centering member 9 when the clamp plate 17 is lowered by clamp plate elevating means (not shown). Accordingly, the B-side centering member 9 pushes down the A-side centering member 4 while it is guided by the spindle 3. Thus, when the tapered part 9a of the B-side centering member 9 associated with a peripheral part of the center hole 1Bh of the B side 1B, the B side 1B of the double-sided disk 1 is centrally positioned. Then, the clamp plate 17 is lifted by a predetermined amount and separated from the clamper 8 (more specifically, from the ' projection 9T which is the highest part of the B-side centering member 9), whereby the B-side reading/writing state in Fig. 8 is provided.

In this state, the sub magnet 11 fixed to the B-side centering member 9 is sufficiently close to the yoke 12 and since the attraction force (magnetic force) working between the sub magnet 11 and the yoke 12 is stronger than repulsive force (urging force) of the compression spring 16, the B side 1B of the double-sided disk 1 is held in a centering state. In addition, the state in which the magnetic force of the sub magnet 11 surpasses the repulsive force of the compression spring 16 and the B side 1B is held in the centering state is referred to as a self-holding state.

In order to switch the reading or writing state of the double-sided disk 1 from the B-side reading/writing state to the A-side reading/writing state, the clamp plate 17 is lifted and the holder 18 is lifted by engaging with the B-side centering member 9, whereby the pressed state of the double-sided disk 1 toward the turntable 5 is released and then the A-side reading/writing state shown in Fig. 7 is provided.

As described above, according to the conventional disk clamp apparatus, the double-sided disk 1 is clamped on the turntable 5 in the centering state by the magnetic force of the main magnet 10 provided in the clamper 8. The B-side centering member 9 which can slide with respect to the main magnet 10 and includes the sub magnet 11 for self-holding and the compression spring 16 is provided, and the B-side centering member 9 is switched in position by the force (external force) of the clamp plate 17 to be held itself, whereby the A side 1A and the B side 1B are centrally positioned respectively.

As a disk clamp apparatus incorporated in a disk apparatus in which an information signal is read and/or written on a double-sided disk, the apparatus is preferably simple in structure as much as possible. However, according to the conventional constitution, the two magnets (the main magnet 10 and the sub magnet 11) and the two compression springs (the compression spring 15 and the compression spring 16) are needed in the clamper 8, so that the number of parts is increased and the constitution of the clamper 8 is complicated for that.

### SUMMARY OF THE INVENTION

It is an object of the present invention to provide a disk clamp apparatus which can perform a centering operation on a disk with high precision and reliably at the time of A-side reading/writing operation and at the time of B-side reading/writing operation, with the small number of parts and simple structure.

In order to solve the above problems, according to a first aspect of the present invention, there is provided a disk clamp apparatus which clamps a disk set on a turntable thereon, including: first centering means provided on a side opposite to a disk set face of the turntable on which the disk is set, for positioning a center of a first side of the disk set on the turntable; a clamper member provided so as-to be opposed to the first centering means across the turntable and the disk, and comprising a disk supporting part for supporting a second side of the disk opposed to the first side of the disk when the first side of the disk is centrally positioned by the first centering means, and second centering means for centrally positioning the second side of the disk; an attraction force generating mechanism mounted on at least either one of the turntable or the first centering means and on the clamper member, in order to clamp the disk on the turntable by attraction force; and a clamper member turning mechanism for turning the clamper member in order to change over a clamp mode between a first clamp mode in which the disk is clamped with the first side of the disk centrally positioned, and a second clamp mode in which the disk is clamped with the second side of the disk centrally positioned, wherein the second centering means cancels the centering operation with respect to the first side of the disk by the first centering means, and centrally positions the second side of the disk by the attraction force generated by the attraction force generating mechanism when the first clamp mode is switched to the second clamp mode.

In this constitution, the disk clamp apparatus includes the disk supporting part for supporting the second side of the disk when the first side of the disk is centrally positioned by the first centering means, and second centering means for centrally positioning the second side of the disk. The clamp mode is changed over by turning the clamper member through the clamper member turning mechanism. And, the second centering means cancels the centering operation with respect to the first side of the disk by the first centering means, and centrally positions the second side of the disk by the attraction force generated by the attraction force generating mechanism when the first clamp mode is switched to the second clamp mode. Thereby, the centering operation on the disk, with high precision and reliably, with respect to the first side and the second side of the disk respectively, with the relatively small number of parts and simple structure. That is, according to the first aspect of the present invention, there can be. provided an effect that the clamp apparatus for performing the centering operation on both the first and the second sides of the disk can be implemented with the smaller number of parts and relatively simple constitution.

According to an embodiment of the first aspect of the present invention, preferably, the first centering means can be relatively moved with respect to the clamper member, and an urging means for urging the first centering means toward the clamper member is further provided.

In this constitution, it is possible to urge the first centering means toward the disk set on the turntable by the urging means. And, since the first centering means can be relatively moved with respect to the clamper member, the second centering means is able to reliably cancel the centering operation with respect to the first side of the disk by the first centering. means by the attraction force generated by the attraction force generating mechanism when the first clamp mode is switched to the second clamp mode.

Further, according to an embodiment of the first aspect of the present invention, a component provided in the clamper. member among components of the attraction force generating mechanism is preferably common in both first clamp mode and second clamp mode.

In this constitution, the attraction force generating mechanism can be constituted with the small number of parts and simple structure.

Furthermore, according to an embodiment of the first aspect of the present invention, the attraction force generating mechanism is preferably consists of a magnet and a magnetic body.

In this constitution, it is possible to clamp the disk on the turntable reliably by attraction force with a more simple structure.

According to a second aspect of the present invention, there is provided a disk clamp apparatus which sets a disk in which an information signal can be written on both sides by attaching a pair of substrates each having center holes, on a turntable and clamps it on the turntable, including: first centering means for centrally positioning the disk by ' engaging with the center hole of one side of the disk, second centering, means for centrally positioning the disk by engaging with the center hole of the other side of the disk; and switching means for switching the second centering means between a opposing state in which it is opposed to the disk and a non-opposing state in which it is not opposed to the disk, wherein the switching means brings. the second centering means into being opposed to the disk when the disk is centrally positioned by the second centering means and brings the second centering means into the non-opposing state in which it is not opposed to the disk when the disk is centrally positioned by the first centering means.

In this constitution, the switching means brings the second centering means into being opposed to the disk when the disk is centrally positioned by the second centering means and brings the second centering means into the non-opposing state in which it is not opposed to the disk when the disk is centrally positioned by the first centering means. Thereby, the centering operation with respect to the both sides of the disk is performed with high precision and reliably, with a more simple constitution..

. According to an embodiment of the second aspect of the present invention, the switching means performs the switching operation in which the second centering means is preferably moved between the opposing state and the non-opposing state, through a turning operation.

In this constitution, the switching operation with respect to the second centering means can be made more compact.

### BRIEF DESCRIPTION OF THE DRAWINGS

Fig. 1 is a sectional view showing a state of A-side reading and/or writing of a double-sided disk in a disk clamp apparatus according to a first embodiment of the present invention;
Fig. 2 is a sectional view showing a state of B-side reading and/or writing of the double-sided disk in the disk clamp apparatus according to the first embodiment of the present invention;
Fig. 3 is a perspective view showing a constitution of a clamper member turning mechanism in the disk clamp apparatus according to the first embodiment of the present invention;
Fig. 4 is a sectional view showing a state of A-side reading and/o writing of a double-sided disk in a disk clamp apparatus according to a second embodiment of the present invention; .
Fig. 5 is a sectional view showing a state of B-side reading and/or writing of the double-sided disk in the disk clamp apparatus according to the second embodiment of the present invention;
Fig. 6 is a sectional view showing a centering principle of the double-sided disk;
Fig. 7 is a sectional view showing a state of A-side reading and/or writing of a double-sided disk in a disk clamp apparatus according to a prior art; and
Fig. 8 is a sectional view showing a state of B-side reading and/or writing of a double-sided disk in the disk clamp apparatus according to the prior art.

### DESCRIPTION OF THE PREFERRED EMBODIMENTS

Hereinafter, embodiments of the present invention will be described with reference to the accompanying drawings.

### A first embodiment

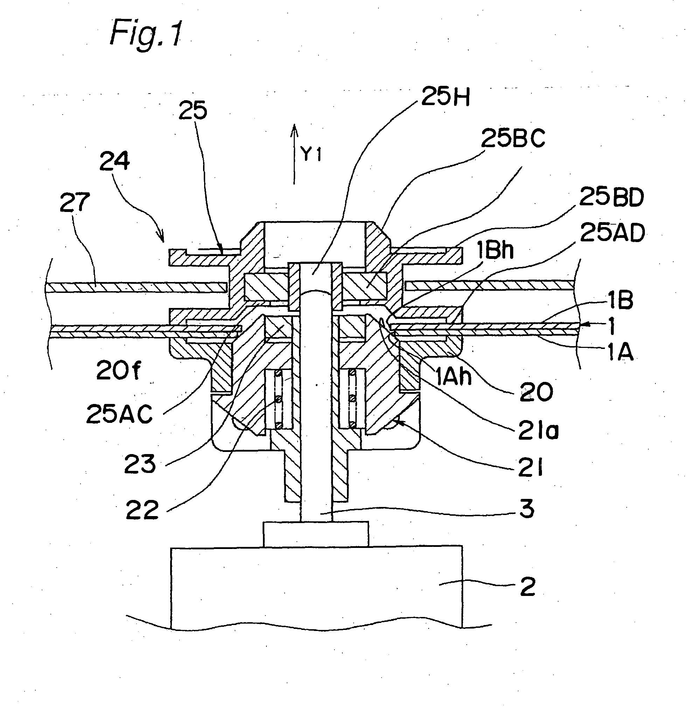

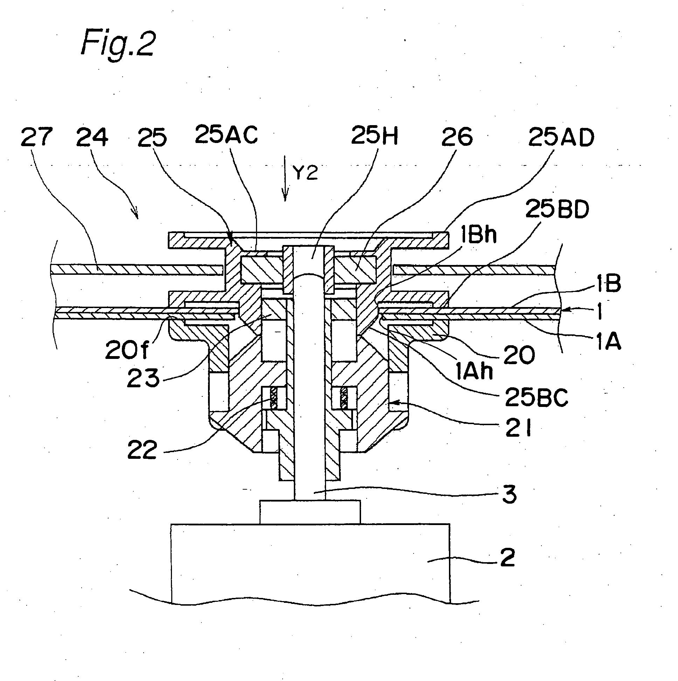

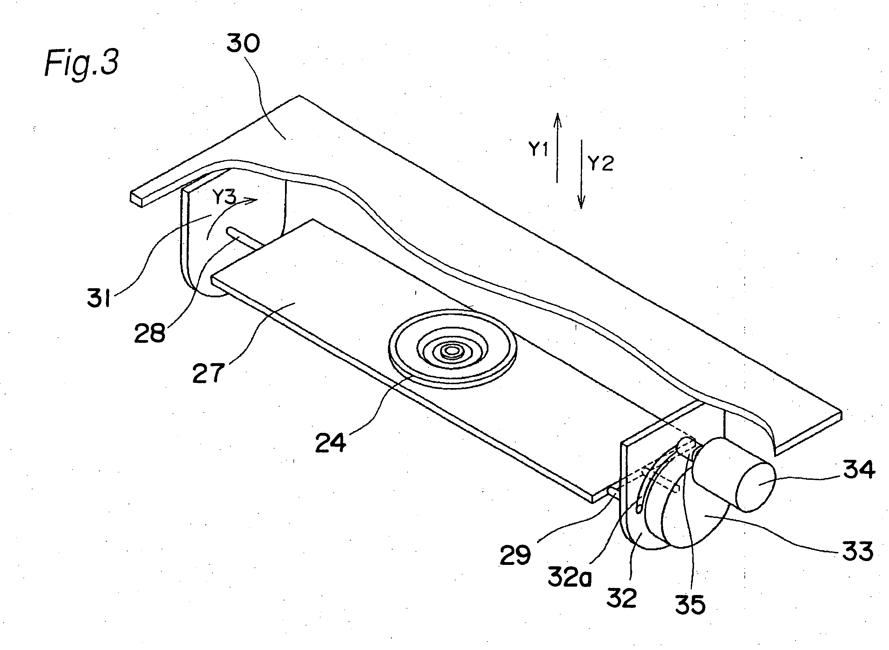

Fig. 1 is a sectional view showing a state corresponding to a state at the time of A-side reading/writing operation of a disk clamp apparatus according to a first embodiment of the present invention, Fig. 2 is a sectional view showing a state corresponding to a state at the time of B-side reading/writing operation of the disk clamp apparatus, and Fig. 3 is a perspective view showing a constitution of a clamp member turning mechanism of the disk clamp apparatus. ..

In addition; in the following description, the same reference numerals and signs as above are allotted to components which have the same constitutions and the same effects as in the disk clamp apparatus according to the prior art described above (refer to Figs. 6 to 8) and their description is-not made any more.

As shown Figs. 1 and 2, the disk clamp apparatus according to this embodiment comprises a centering member 21 for the A side which is used in performing reading/writing operation on the A side of the double-sided disk 1 set on a disk set face 20f of a turntable 20. The A-side centering member 21 centrally positions the A side 1A of the disk 1 by associating a tapered part 21a with a peripheral part of a center hole 1Ah of the A side 1A of the double-sided disk 1. The A-side centering member 21 is disposed on the side opposite to a disk set face 20f of the turntable 20, and it is provided so as to be able to slide with respect to the turntable 20 in the vertical direction in Figs. 1 and 2.

A side 1A of the double-sided disk 1 corresponds to "first side", "one side" (of the disk) according to claims in this application. And, A-side centering member 21 corresponds to a "first centering means" according to claims in this application.

In addition, the tapered part 21a of the A-side centering member 21 may be continuously formed over an entire periphery of the A-side centering member 21 or may be separately formed at several points (two or three points, for example) of the periphery of the A-side centering member 21 and penetrate a slit in the turntable 20 in the vertical direction. Although the A-side centering member 21 can slide in the vertical direction according to this embodiment, the present invention is not limited to the vertical direction and it may slide in another direction such as the lateral direction or the back and forth direction depending on a installation state of the disk apparatus.

A compression spring 22 which forces the A-side centering member 21 upward in Figs. 1 and 2 is provided between the turntable 20 and the A-side centering member 21. In addition, a ring-shaped magnetic body 23 made of iron or steel, for example is fixed to an upper part of the turntable 20 in Figs. 1 and 2. In addition, the magnetic body 23 may be fixed to the A-side centering member 21.

A clamper 24 which presses and clamps the disk 1 set on the turntable 20 toward the turntable 20 includes a clamper member 25 as a main component. The clamper member 25 includes an A-side centering supporting part 25AC, an A-side disk supporting part 25AD, a B-side centering part 25BC, and a B-side disk supporting part 25BD, and there is provided a guide hole 25H in the center in which the spindle 3 is fit so as to be able to slide. The clamper member 25 is disposed so as to oppose the A-side centering member 21 across the turntable 20 and the disk 1.

The A-side centering supporting part 25AC is opposed to the A-side centering member 21 at-the time of A-side reading/writing operation. And the A-side disk supporting part 25AD is to support the B side of the double-sided disk 1 opposed to the A side thereof and press the double-sided disk 1 toward the turntable 20 at the time of A-side reading/writing operation. In addition, the B-side centering part 25BC is associated with a peripheral part of a center hole 1Bh of the B side 1B to perform a centering operation at the time of B-side reading/writing operation, and the B-side disk supporting part 25BD presses the double-sided disk 1 toward the turntable 20 at the time of B-side reading/writing operation.

In addition, B-side 1B of the double-sided disk 1 corresponds to "second side", "the other side" (of the disk) according to claims in this application. And, the B-side centering part 25BC corresponds to "second centering means" according to claims in this application.

The clamper member 25 is held by a clamp plate 27. This clamp plate 27 holds the clamper member 25 and also turns or elevates it as will be described below. A predetermined clearance is provided at an engaging part between the clamp plate 27 and the clamper member 25 so that the clamper member 25 may freely lift or lower (slide) with respect to the turntable 20. Although this clearance may be provided so that the clamp plate 27 and the clamper member 25 can be completely separated as shown in the figure, since it may only have to be provided such that at least the clamper 24 can freely slide with respect to the turntable 20, they are not necessarily completely separated.

Furthermore, a ring-shaped magnet 26 formed of a permanent magnet, for example is fixed to the clamper member 25. The magnet 26 and the magnetic body 23 fixed to the turntable 20 constitute an "attraction force generating mechanism (clamp the disk 1 on the turntable 20 by the attraction force) according to claims in this application. As will be described below, the disk 1 on the turntable 20 is pressed toward the turntable 20 so as to be clamped by the attraction force based upon magnetic force working between the magnet 26 and the magnetic body 23.

As shown in Fig. 3, pivot axes 28 are provided at both ends of the clamp plate 27 in the longitudinal direction. The clamp plate 27 can be turned around the pivot axes 28. A drive gear 33 which is driven when the clamp plate 27 is turned is fixed to an end of one of the pivot axes 28 (the left in Fig. 3) and a position regulation axis 29 for regulating a turning position of the clamp plate 27 is provided at one side end (the left in Fig. 3) of the clamp plate 27 in the longitudinal direction.

Meanwhile, first and second support plates 31 and 32 for supporting the pivot axes 28 rotatably are arranged on both sides of the clamp plate 27 in the longitudinal direction and upper parts of these support plates 31 and 32 are fixed to a base member 30. In assembling the clamper 24, the clamp plate 27 and the like into the disk drive, basically they are assembled through the base member 30.

There is provided a guide hole 32a in which the position regulation axis 29 of the clamp plate 27 fits so as to be able to freely move, in the second support plate 32. On the side of the second support plate 32, a motor 34 for turning the clamp plate 27 and the drive gear 33 fixed to the end of one pivot axis 28 (the right in Fig. 3) of the clamp plate 27 are arranged so that a motor gear 35 fixed to an output axis of the motor 34 can engage with the drive gear 33.

The base member 30 is lifted or lowered with respect to the turntable 20 by an elevating mechanism (not shown). Although the elevating mechanism of the base member 30 is not illustrated, the conventionally well-known mechanism can be applied, which includes a motor, a gear, a rack member and a cam, for example. When the motor 34 is driven, driving force is transmitted to the clamp plate 27 through the motor gear 35, the drive gear 33 and the pivot axis 28 and the clamp plate 27 is turned around the pivot axes 28.

In addition, the clamp plate 27, the pivot axes 28, the motor 34, the motor gear 35 and the drive gear 33 constitute a "clamp member turning mechanism" according to claims in this application.

Next, a description will be made of an operation of the disk clamp apparatus (refer to Figs. 1 to 3) constituted as described above.

First, a state at the time of A-side reading/writing operation as shown in Fig. 1, the A side 1A on the double-sided disk 1 is centrally positioned by the tapered part 21a of the A-side centering member 21 and pressed toward the turntable 20 by the A-side disk supporting face 25AD. This pressing force is generated by attraction force of magnetic force working between the magnet 26 and the magnetic body 23. This clamp mode corresponds to "first clamp mode" according to the claims in this application. In this state, the B-side centering part 25BC (the second centering means) of the clamper member 25 is in non-opposing state in which it is not opposed to the disk.

A state at the time of B-side reading/writing as shown in Fig. 2, the B-side centering part 25BD pushes down the A-side centering member 21 against the force of the compression spring 22 by the attraction force of the magnetic force working between the magnet 26 and the magnetic body 23 and centrally positions the B side 1B of the disk 1. In this sate, the double-sided disk 1 is pressed toward the turntable 20 by the B-side disk supporting part 25BD. This clamp mode corresponds to "second clamp mode" according to the claims in this application. In this state, the B-side centering part 25BC (the second centering means) of the clamper member 25 is kept in opposing state in which it is opposed to the disk.

Switching the reading/writing operation from the A side to B side (that is, changing over the clamp-mode) is performed such that the base member 30 is lifted in the direction opposite to the clamping direction (in the direction shown by arrow Y1 shown in Fig. 3), by a base member elevating mechanism (not shown) and accordingly the clamp plate 27 which holds the clamper 24 is lifted; so that the clamper 24 is separated from the turntable 20 and the guide hole 25H is separated from the spindle 3. In addition, a lifting end position of the base member 30 is set so that the clamp plate 27 may not interfere with other parts when the clamp plate 27 is turned around the pivot axes 28.

When the clamper 24 reaches a predetermined position (lifting end position), the motor 34 rotates and this rotation force is transmitted to the clamp plate 27 through the motor gear 35 and the drive gear 33, so that the clamp plate 27 is turned around the pivot axes 28 by 180° in the direction shown by arrow Y3. This turning operation of the clamp 27 is stopped when the position regulation axis 29 abuts on an end of the guide groove 32a provided in the second support plate 32. The turning direction of the clamp plate 27 is not limited to the direction shown by the arrow Y3 in this embodiment and it may be the opposite direction. In addition, the turning angle is not limited to 180°.

Then, the base member 30 is lowered in the clamping direction (the direction shown by arrow Y2) by the base member elevating mechanism (not shown) and accordingly the clamp plate 27 holding the clamper 24 is lowered, whereby the spindle 3 fits in the guide hole 25H in the clamper 24. Thus, the B-side reading/writing state is established as shown in Fig. 2. At this time, the B-side centering part 25BC of the clamper member 25 is opposed to the disk 1.

Switching from the B-side reading/writing state to the A-side reading/writing state is implemented by a reversed process as described above.

As described above, according to the embodiment 1, while the B-side centering part 25BC, the A-side centering supporting part 25AC, and the magnet 26 are provided in the clamper member 25, the A-side centering member 21 and the magnetic body 23 are provided on the side of the turntable 20. Thus, when the reading/writing state is changed over between the A side and the B side, the clamper 24 is turned 180° by the motor 34, the gear 33 and the clamper plate 27 and switching operation is performed between the centering state by the A-side centering supporting part 25AC and the centering state by the B-side centering part 25BC. At the time of B-side reading/writing operation, the B-side centering part 25BC pushes down the A-side centering member 21 and centrally positions the B side 1B. Thus, the centering operation of respective A side and B side of the double-sided disk 1 can be surely performed by a simple clamper constitution with the small number of parts.

That is, the opposing state of the B-side centering part 25BC to the disk is kept so that it is opposed to the disk when the disk is centrally positioned by the B-side centering part 25BC, and it is switched to non-opposing state in which it is not opposed to the disk when the disk is centrally positioned by the A-side centering member 21. Thereby, the centering operation with respect to the both sides 1A and 1B of the disk is performed with high precision and reliably, with a more simple constitution.

In this case, since the compression spring 22 for urging the A-side centering member 21 toward the clamper member 25 is further provided between the A-side centering member 21 and the turntable 20, it is possible to urge the A-side centering member 21 toward the disk set on the turntable 20. And, since the A-side centering member 21 can be relatively moved with respect to the clamper member 25, the B-side centering part 25BC is able to reliably cancel the centering operation with respect to the first side 1A of the disk 1 by the A-side centering member 21 by the attraction force generated by the attraction force generating mechanism when the first clamp mode is switched to the second clamp mode.

Further, the switching of the opposing state of the B-side centering part 25BC to the disk 1 is performed through the turning operation of the clamper member turning mechanism, the switching operation with respect to the B-side centering part 25BC can be made more compact.

Furthermore, the component (the magnet 26) provided in the clamper member 25 among components (the magnetic body 23, the magnet 26) of the attraction force generating mechanism is common in both first clamp mode and second clamp mode. Accordingly, the attraction force generating mechanism can be constituted with the small number of parts and simple structure.

Furthermore, since the attraction force generating mechanism is consists of a magnet 26 and a magnetic body 23, it is possible to clamp the disk 1 on the turntable 20 reliably by attraction force with a more simple structure.

### A second embodiment

A description will be made of a second embodiment of the present invention.

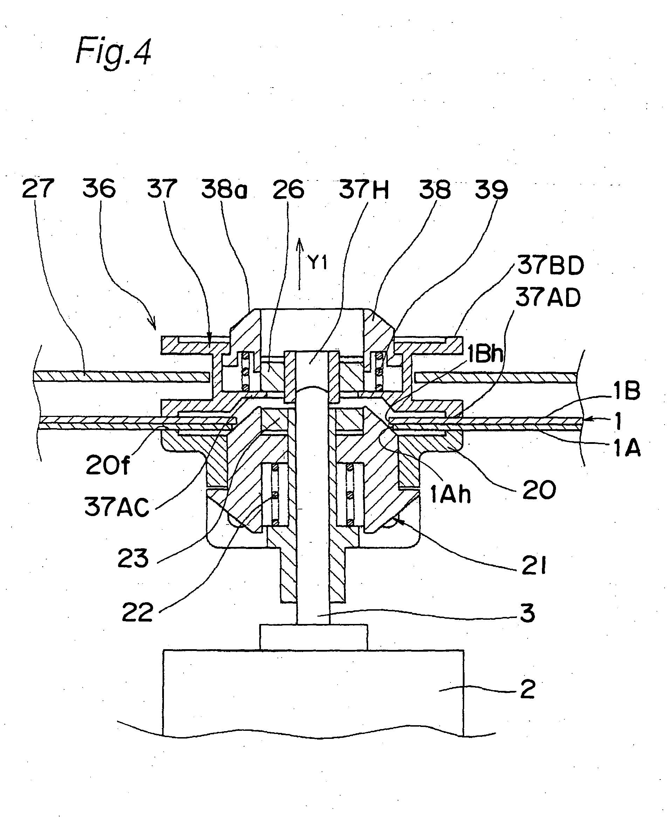

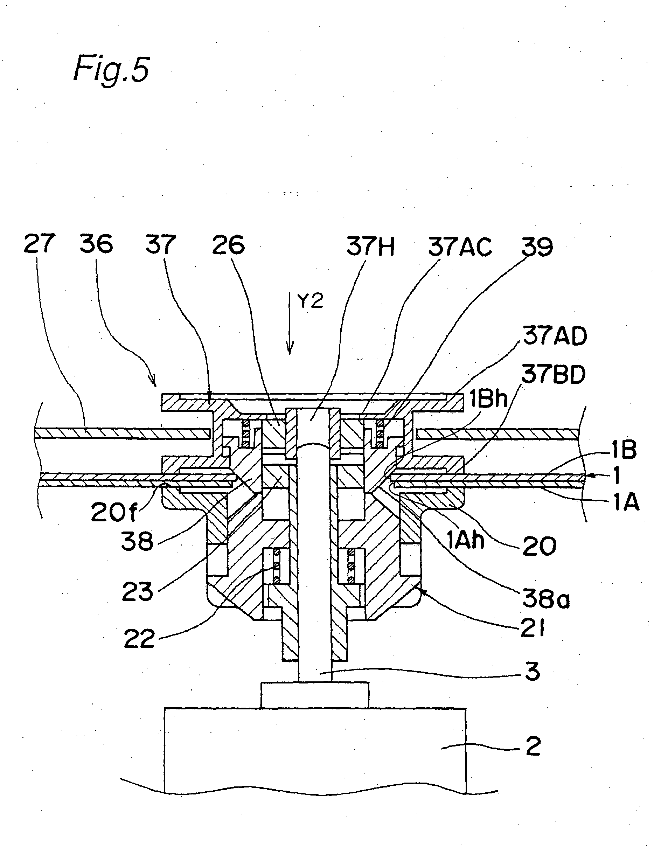

Fig. 4 is a sectional view showing a state corresponding to a state at the time of A-side reading/writing operation of a disk clamp apparatus according to the second embodiment, Fig. 5 is a sectional view showing a state corresponding to a state at the time of B-side reading/writing operation of the disk clamp apparatus according to the second embodiment.

According to the second embodiment, a B-side centering member 38 and a clamper 37 are separately formed in a clamper 36. A compression spring 39 which urges both members 37, 38 to be separated is provided between the clamper member 37 and the B-side centering member 38. While the B-side centering member 38 receives the urging force of the compression spring 39, it is mounted on the clamper member 37 so as to be able to slide in the vertical direction with respect to the clamper member 37.

A tapered part 38a of the B-side centering member 38 may be continuously formed over an entire periphery of the B-side centering member 38 or may be separately formed at several points (two or three points, for example) of the periphery of the B-side centering member 38 and penetrate vertically a slit provided in the clamper member 37.

Elastic force of the compression spring 39 is set so as to be greater than that of a compression spring 22 which urges an A-side centering member 21. Thus, when the center is positioned on a B side of a disk 1, by attraction force based on magnetic force working between a magnet 26 and a .magnetic body 23, the B-side centering member 38 pushes down the A-side centering member 21 to centrally position a center hole 1Bh of the B side 1B, and presses the double-sided disk 1 toward a turntable 20 by a B-side disk supporting part 37BD with predetermined pressing force.

In addition, it is constituted so that a spindle 3 of a motor 2 can fit in a guide hole 37H at the center of the clamper member 37 so as to be able to slide.

A description will be made of an operation of the disk clamp apparatus constituted as described above according to the second embodiment.

A state corresponding to a state at the time of A-side reading/writing operation as shown in Fig. 4, the A side 1A of the double-sided disk 1 is centrally positioned when a tapered part 21a of the A-side centering member 21 is associated with a peripheral part of a center hole 1Bh of the B side 1B of the disk 1, and the disk 1 is pressed toward a turntable 20 by an A-side disk supporting part 37AD. This pressing force is generated by the attraction force of the magnetic force working between the magnet 26 and the magnetic body 23.

A state corresponding to a state at the time of B-side reading/writing operation as shown in Fig. 5, the B-side centering part 38 pushes down the A-side centering member 21 in the direction shown by arrow Y5 by the attraction force of magnetic force working between the magnet 26 and the magnetic body 23 and positions the center of the B side 1B when the tapered part 38a abuts on the peripheral part of the center hole 1Bh of the B side 1B. In this state, the double-sided disk 1 is pressed toward the turntable 20 by the B-side disk supporting part 37BD. At this time, variation or eccentricity in inner diameter dimension of the center hole 1Bh of the B side 1B is absorbed through an operation when the B-side centering member 38 is pushed down toward the clamper member 37.

Switching from the A-side reading/writing state to the B-side reading/writing state and switching from the B-side reading/writing state to the A-side reading/writing state are performed in the same manner in the embodiment 1.

As described above, according to the embodiment 2, the clamper member 37 and the B-side centering member 38 are separately formed and the compression spring 39 which forces both members 37 and 38 to be separated from each other is provided between the clamper member 37 and the B-side centering member 38. The B-side centering member 38 is mounted on the clamper member 37 so as to be able to slide in the vertical direction while it receives the force of the compression spring 39.

In this constitution, when the centering is performed by bringing the tapered part 38a of the B-side-centering member 38 in contact with the marginal part of the center hole 1Bh of the B side 1B of the double-sided disk 1 at the time of B-side reading/writing operation, variation in inner diameter dimension of the center hole 1Bh of the B side 1B or variation in eccentricity between the center hole 1Bh of the B side 1B and a center hole 1Ah of the A side 1A can be absorbed through the operation when the B-side centering member 38 is pushed down from the clamper member 37. As a result, the centering operation can be performed with high precision.

Although the magnet provided in the clamper member is common in the case it is opposed to the A-side centering supporting part and in the case it is opposed to the B-side centering part in the above description, the magnet for the A-side centering supporting face and the magnet for the B-side centering part may be separately provided.

In addition, although the turning mechanism of the clamper member is mainly constituted by the motor and the gear in the above description, it may be constituted by other mechanisms such as a motor and a rack and the like.

Furthermore, although the clamper is vertically moved and the turntable is fixed in vertical position in order to clamp the disk in the above description, the clamper may be fixed in vertical position and the turntable may be vertically moved to clamp the disk.

Still further, although the magnet is provided in the clamper member and the magnetic body is provided in the turntable in the above description, the magnet may be provided in the turntable and the magnetic. body may be provided in the clamper member.

Thus, it will be obvious that the present invention is not limited to the above embodiments and various variation or modification may be made without departing from the scope of the present invention.

Thus, the present invention relates to the disk clamp apparatus which concentrically clamps the disk on the turntable in a disk apparatus in which an information signal is read and/or written on a disk-shaped record medium, especially in a disk apparatus in which reading and/or writing operation can be performed on both sides of the disk. The disk clamp apparatus can be effectively used as a disk clamp apparatus for the disk apparatus which can read and/or write an information signal on CD and DVD, which has the small number of parts and a simple constitution and performs the centering operation with high precision at the time of A-side reading and/or writing operation and at the time of B-side reading and/or writing operation.

## Claims

1. A disk clamp apparatus which clamps a disk set on a turntable thereon, comprising:
first centering means provided on a side opposite to a disk set face of the turntable on which the disk is set, for positioning a center of a first side of the disk set on the turntable,
a clamper member provided so as to be opposed to the first centering means across the turntable and the disk, and comprising a disk supporting part for supporting a second side of the disk opposed to the first side of the disk when the first side of the disk is centrally positioned by the first centering means, and second centering means for centrally positioning the second side of the disk,
an attraction force generating mechanism mounted on at least either one of the turntable or the first centering means and on the clamper member, in order to clamp the disk on the turntable by attraction force; and
a clamper member turning mechanism for turning the clamper member in order to change over a clamp mode between a first clamp mode in which the disk is clamped with the first side of the disk centrally positioned, and a second clamp mode in which the disk is clamped with the second side of the disk centrally positioned, wherein
the second centering means cancels the centering operation with respect to the first side of the disk by the first centering means, and centrally positions the second side of the disk by the attraction force generated by the attraction force generating mechanism when the first clamp mode is switched to the second clamp mode.

2. The disk clamp apparatus according to claim 1, wherein the first centering means can be relatively moved with respect to the clamper member, and an urging means for urging the first centering means toward the clamper member is further provided.

3. The disk clamp apparatus according to claim 1 or 2, wherein a component provided in the clamper member among components of the attraction force generating mechanism is common in both first clamp mode and second clamp mode.

4. The disk clamp apparatus according to any one of claims 1 to 3, wherein the attraction force generating mechanism comprises a magnet and a magnetic body.

5. A disk clamp apparatus which sets a disk in which an information signal can be written on both sides by attaching a pair of substrates each having center holes, on a turntable and clamps it on the turntable, comprising:
first centering means for centrally positioning the disk by engaging with the center hole of one side of the disk,
second centering means for centrally positioning the disk by engaging with the center hole of the other side of the disk; and
switching means for switching the second centering means between a opposing state in which it is opposed to the disk and a non-opposing state in which it is not opposed to the disk, wherein
the switching means brings the second centering means into being opposed to the disk when the disk is centrally positioned by the second centering means and brings the second centering means into the non-opposing state in which it is not opposed to the disk when the disk is centrally positioned by the first centering means.

6. The disk clamp apparatus according to claim 5, wherein the switching means performs the switching operation in which the second centering means is moved between the opposing state and the non-opposing state, through a turning operation.
